# EUROPÄISCHE PATENTSCHRIFT

(11) **EP 0 577 599 B1**
(45) Veröffentlichungstag und Bekanntmachung des Hinweises auf die Patenterteilung: **02.05.1997**
(21) Anmeldenummer: 91912688.8
(22) Anmeldetag: 16.07.1991
(51) Int. Cl.: G01N 29/00, G01N 29/08, G01N 29/26

(54) **ULTRASCHALL-MESSVERFAHREN FÜR DEN WANDDICKENVERLAUF EINER SCHWEISSNAHT EINES ROHRES**
ULTRASONIC MEASUREMENT PROCESS FOR THE WALL THICKNESS VARIATION IN THE REGION OF THE WELDING SEAM OF A PIPE
METHODE DE MESURE ULTRASONIQUE DE LA VARIATION DE L'EPAISSEUR DE PAROI DANS LA ZONE DE LA SOUDURE D'UN TUBE

(30) Priorität: 23.03.1991 DE 4109625
(43) Veröffentlichungstag der Anmeldung: 12.01.1994
(73) Patentinhaber: KRAUTKRÄMER GmbH & Co., D-50354 Hürth (DE)
(72) Erfinder: KARBACH, Bernhard, D-5042 Erftstadt-Friesheim (DE); SCHULZ, Siegmar, D-5000 Köln 41 (DE); STEINERT, Peter, D-5014 Kerpen (DE)
(74) Vertreter: Bauer, Wulf, Dr.
(86) Internationale Anmeldenummer: DE9100578
(87) Internationale Veröffentlichungsnummer: WO9216832

(56) Entgegenhaltungen:
- EP-A- 0 334 053
- WO-A-80/00616
- FR-A- 1 595 830
- US-A- 4 467 654

## Beschreibung

Die Erfindung bezieht sich auf ein Ultraschall-Meßverfahren für den Wanddickenverlauf einer Schweißnaht eines Rohrs, insbesondere eines Rohrs mit geschabter Schweißnaht, bei dem ein Ultraschall-Schwinger über eine Wasservorlaufstrecke akustisch an das Rohr angekoppelt wird, von ihm Ultraschallimpulse in einem Schalleintrittsbereich in das Rohr eintreten, die reflektierten Anteile dieser Impulse von dem Ultraschall-Schwinger wieder aufgenommen und als elektrisches Signal einer Schaltung für Meßwertaufbereitung zugeleitet werden, der Ultraschall-Schwinger relativ zum Rohr parallel zur Rohrachse bewegt wird und der Schalleintrittsbereich quer zur Rohrachse so hin- und herbewegt wird, daß die Schweißnaht und die Randbereiche links und rechts der Schweißnaht überfahren werden sowie auf Vorrichtungen zur Durchführung dieses Meßverfahrens nach dem Oberbegriff der Patentansprüche 8 bzw. 9.

Bei einem geschweißten Rohr weicht der Wanddickenverlauf im Bereich der Schweißnaht allgemein vom Verlauf der Wanddicke des sonstigen Rohrquerschnitts ab. Ziel bei der Herstellung eines geschweißten Rohres ist es, daß der Wanddickenverlauf sich möglichst wenig, insbesondere gar nicht vom Wanddickenverlauf außerhalb der Schweißnaht unterscheidet, so daß sich das geschweißte Rohr möglichst wenig von einem ideal zylindrischen Rohr unterscheidet.

Ohne Nachbearbeitung ist die Schweißnaht im allgemeinen dicker als die Wanddicke des Blechs (coil), aus dem das Rohr erstellt ist. Dabei wird angestrebt, daß sowohl außen als auch innen die Schweißnaht gegenüber der idealen Zylindergeometrie übersteht, also konvex ist. Die Schweißnaht kann dann durch Nachbearbeitung, insbesondere Schabung, soweit abgetragen werden, daß außen und innen der ideale Zylinderverlauf vorliegt.

Bereits bei der Schweißung kann es zu Fehlern kommen, trotz größerer Wanddicke im Bereich der Schweißnaht kann die Außenkontur eingedellt (konkav) verlaufen, die Innenkontur hat dann eine relativ starke, konvexe Krümmung. Weiterhin können in Längsrichtung der Schweißnaht kleinere Unregelmäßigkeiten, beispielsweise Wellen oder Rippen, auftreten.

Durch die Nachbehandlung, die im folgenden unter dem Begriff Schabung zusammengefaßt wird, wird außen und innen Material abgetragen mit dem Ziel, den Querschnittsverlauf so zu gestalten, daß eine ideale, rein zylindrische Rohrgeometrie vorliegt. Die Schabung geschieht allgemein mit einem Meißel, ein äußerer Meißel ist für die Aupenschabung zuständig, ein innerer Meißel für die Innenschabung. Beide sind in einem gewissen Abstand hinter der schweißvorrichtung, die ansich bekannt ist und auf die hier nicht näher eingegangen werden muß, angeordnet. Wenn bei der Schabung Abweichungen auftreten, beispielsweise sich die Anstellung des Meißels ändert, der Meißel abnutzt oder gar abbricht, weicht die Rohrgeometrie vom angestrebten, idealen Verlauf ab. Typisch sind dabei Schabungen, die etwas oberhalb der eigentlichen, idealen Rohrkontur durchgeführt werden und zu scharfkantigen Stufen im Querschnittsverlauf des Rohres führen. Bei einer anderen Abweichung wird zuviel geschabt, das Rohr erhält eine Abplattung im Querschnittsverlauf an der Schweißnaht.

Bekannt ist eine Schweißnahtprüfung der eingangs genannten Art, die mittels eines wasserangekoppelten Ultraschall-Schwingers erfolgt. Dieses Ultraschall-Meßverfahren arbeitet jedoch nicht mit der Genauigkeit, die bei der Prüfung nachbearbeiteter Schweißnähte gefordert wird. So ist es schwierig, Geometrien von geschabten Rohren zu erfassen, bei denen die Wanddicke im Verlauf der Schweißnaht zwar exakt ebenso groß ist wie neben der Schweißnaht, jedoch vom idealen Verlauf der Zylindergeometrie abweicht, weil beispielsweise die Außenschabung zu einer Abplattung führte und bei der Innenschabung eine gewisse Konvexität erhalten blieb. Insbesondere aber lassen sich nach dem vorbekannten Ultraschall-Meßverfahren Stufen, insbesondere kleinere Stufen im Querschnittsverlauf des Rohres nicht sicher nachweisen. Der Transport des Rohres mittels der Mechanik erfolgt stets mit einer gewissen Unregelmäßigkeit. Das transportierte Rohr führt meist kleinere Bewegungen quer zu seiner Längsachse durch, die periodisch oder unperiodisch sind. Periodische Bewegungen treten beispielsweise durch ausgeschlagene oder abgenutzte Führungsrollen auf. Nach dem vorbekannten Verfahren ist eine Unterscheidung zwischen Führungsungenauigkeiten und Geometrieabweichungen gleicher Größe, beispielsweise kleinen Stufen im Querschnittsverlauf des geschweißten Rohres, nicht erreichbar.

Die Anforderungen an die Geometrie geschweißter Rohre sind insbesondere durch die Abnehmer und Einsatzzwecke bestimmt. Werden geschweißte Rohre beispielsweise für Auspuffanlagen eingesetzt, so können Abweichungen von der Idealgeometrie zu Strömungsveränderungen der Auspuffgase führen, die den Wirkungsgrad der Auspuffanlage, insbesondere einer Auspuffanlage mit Katalysator, erheblich beeinträchtigen.

Bei dem Ultraschallmeßverfahren der eingangs genannten Art ist der Ultraschall-Schwinger nicht direkt am Rohr geführt. Bei Führung des Ultraschall-Schwingers direkt am Rohr würde immer eine konstante Vorlaufstrecke vorliegen, so daß Abweichungen von der idealen Zylindergeometrie, z. B. Abplattungen durch Außenschabung, nicht erfaßt werden können. Das vorbekannte Meßverfahren arbeitet daher mit einer Bewegungsvorrichtung, die den Ultraschall-Schwinger ohne direkte Führung, also frei, relativ zum Rohr bewegt. Die freie Oszillation hat aber den Nachteil, daß die bereits beschriebenen Lageänderungen (z. B. Vibrationen) des Rohres ebenfalls den Wasservorlaufweg ändern und damit Geometriefehler vortäuschen können. Die Einschallung erfolgt radial, so daß die Rohrwand senkrecht getroffen wird.

Ausgehend von dem Meßverfahren der eingangs genannten Art hat sich die Erfindung die Aufgabe gestellt, die Nachteile dieses bekannten Verfahrens und der danach arbeitenden Vorrichtung zu vermeiden und Verfahren und Vorrichtung dahingehend zu verbessern, daß Relativbewegungen des Rohres quer zur idealen (theoretischen) Rohrmittelachse keinen Einfluß auf den Meßwert haben, so daß auch kleine Stufen der Wanddicke im Querschnittsverlauf eines geschweißten, nachbearbeiteten Rohres erfaßt werden können.

Gelöst wird diese Aufgabe ausgehend von dem Ultraschall-Meßverfahren der eingangs genannten Art durch die Verfahren mit den Merkmalen des Patentanspruchs 1 und 7.

Erfindungsgemäß wird somit ein zweiter Ultraschall-Schwinger vorgesehen, der ebenfalls nicht direkt am Rohr geführt ist, und entweder unabhängig vom ersten Ultraschall- Schwinger durch eine eigene Vorrichtung gehalten ist oder mit ihm starr verbunden ist, z. B. in Form zweier Einzelprüfköpfe oder in Form eines Arrays, insbesondere Phased Arrays. Im ersten Fall ist die eigene Vorrichtung z. B. stationär, wobei der zweite Ultraschall-Schwinger das Rohr stets außerhalb der Schweißnaht erfaßt und damit zuständig ist für die Erfassung von Lageänderungen des Rohrs. Eine von ihm erfaßte Lageänderung wird in der Schaltung für Meßwertaufbereitung vom Signal des ersten US-Schwingers abgezogen, so daß Lageänderungen des zu prüfenden Rohres keinen Einfluß auf das Ausgangssignal haben.

Im Fall eines ebenfalls bewegten, zweiten Ultraschall-Schwingers ist die Bewegungsvorrichtung des zweiten Ultraschall-Schwingers so mit der Bewegungsvorrichtung des ersten Ultraschall-Schwingers abgestimmt, daß die Ultraschall-Schwinger zu unterschiedlichen Zeiten die Schweißnaht überfahren. Die beiden Ultraschall-Schwinger sind in einer Querschnittsebene des Rohres gesehen so angeordnet, daß sie entlang des Rohrumfangs versetzt in das Rohr einschallen. Zusätzlich können sie auch noch axial (in Rohrrichtung) gegeneinander versetzt sein. Der Versatz soll möglichst klein gewählt werden. Die beiden Ultraschall-Schwinger sollen an möglichst nahe nebeneinander liegenden Orten in das Rohr einschallen, um dadurch zu erreichen, daß Bewegungen eines Teilbereichs des Rohres gegenüber einen anderen Teilbereich nicht zu einer Verfälschung des Meßergebnisses führen.

Bei separatem, aber nicht querbewegtem zweiten Ultraschall-Wandler wird dieser nur zur Kompensation der Relativbewegungen des Rohres eingesetzt. Wird der zweite Ultraschall-Schwinger auch hin- und herbewegt, liefert er ebenfalls ein Signal über den geometrischen Verlauf der Schweißnaht, das allerdings zeitversetzt zum Signal des ersten Ultraschall-Schwingers auftritt. Die beiden Signale können mittels geeigneter, ansich bekannter Verfahren so miteinander kombiniert werden, daß eine einzige Aussage über den Verlauf der Schweißnaht an der gemessenen Stelle erhalten wird.

Als besonders günstig hat sich die Anordnung vieler Ultraschall-Schwinger zu einem zeilenförmigen Array erwiesen, wobei sich die einzelnen Ultraschall-Schwinger tangential zu einer Radialebene des Rohres angeordnet sind, so daß ihre Zentralstrahlen sich in einem Punkt auf der Rohrlängsachse schneiden. Eine Hin- und Herbewegung der Ultraschall-Schwinger ist nicht notwendig, vielmehr wird elektronisch das Array, das vorzugsweise ein Phased Array ist, so angesteuert, daß der Schalleintrittsbereich auf dem Außenmantel des Rohres hin- und herbewegt wird, wobei die Schweißnaht überstrichen wird. Die Hin- und Herbewegung und. das Abtastverhalten werden so gewählt, daß - wie im bisher beschriebenen Falle separater Ultraschall-Schwinger - Referenzwerte außerhalb der Schweißnaht und Werte von der Schweißnaht selbst vorliegen. Dabei wird eine so kurze Meßzeit gewählt, daß zwischen Erfassung eines Referenzwertes und einer Messung im Bereich der Schweißnaht keine merkliche Bewegung des Rohres stattgefunden haben kann. Im Gegensatz zur bisher beschriebenen Ausführung mit zwei separaten Ultraschall-Schwingern, die vorzugsweise gleichzeitig betrieben werden, ist bei einem Array das Aussenden zweier Impulse zur gleichen Zeit nicht möglich. Allerdings können zwei Impulse so kurz hintereinander ausgesandt und jeweils wieder empfangen werden, daß eine merkliche Rohrbewegung in der Zwischenzeit nicht stattgefunden hat. Rohrbewegungen finden innerhalb einer Zeit größer als 0,1 s statt. Meßwerte, die in kleinerer Zeit eingesammelt werden, sind also von einer Rohrbewegung praktisch nicht beeinflußt.

Relative Änderungen des Rohrs, also Lageänderungen, Vibrationen etc., können sich erfindungsgemäß nicht auf das Meßergebnis auswirken. Äußere Schabefehler oder andere Abweichungen von der äußeren, idealen Zylindergeometrie werden dadurch erfaßt, daß sich die Wasservorlaufstrecke ändert, also das Eintrittsecho sich im Ausgangssignal zeitlich verschiebt. Die Wanddicke kann in bekannter Weise aus der zeitlichen Differenz zwischen diesem Eintrittsecho und dem Rückwandecho erhalten werden. Auf diese Weise läßt sich der Wanddickenverlauf darstellen. Zum Wanddickenverlauf gehören einerseits Abweichungen der Außenkontur von der idealen Zylindergeometrie und andererseits Abweichungen der Innenkontur von der idealen Zylindergeometrie, beide Abweichungen werden unabhängig voneinander erfaßt.

Vorrichtungswäßig wird die gestellte Aufgabe gelöst durch eine Vorrichtung mit den Merkmalen des Patentanspruchs 8 bzw. des Patentanspruchs 9.

In einer bevorzugten Weiterbildung sind die beiden Ultraschall-Schwinger mindestens um die Breite der Schweißnaht (Schabebreite) umfangsmäßig gegeneinander versetzt. Dadurch wird erreicht, daß immer nur ein Ultraschall-Schwinger die nachbearbeitete Schweißnaht abtastet, es befinden sich niemals zwei Ultraschall-Schwinger zu gleicher Zeit in Ankopplung an den geschabten Bereich.

Vorteilhafterweise sind die Ultraschall-Schwinger über Wasserstrahlen an das Rohr akustisch angekoppelt. Ultraschall-Schwinger dieser Art mit einem freien Wasserstrahl zur berührungslosen Ankopplung sind beispielsweise aus dem Buch J. und H. Krautkrämer "Werkstoffprüfung mit Ultraschall", 4. Auflage, Springer Verlag, den US-Patentschriften 3,255,626, 3,485,088, 3,908,455 und 4,403,510 sowie der EP-Patentschrift 119 096 bekannt. In vorteilhafter Ausführung kann ein gemeinsamer, etwas breiterer Wasserstrahl für beide Ultraschall-Schwinger verwendet werden oder sind zumindest beide Ultraschall-Schwinger über dieselbe Wasserförderung angeschlossen, so daß die Funktionssicherheit der Anlage erhöht wird. Die Ankopplung jedes einzelnen Ultraschall-Schwingers kann in bekannter Weise durch Messen des Eintrittsechos überwacht werden.

Vorrichtungsmäßig hat es sich als vorteilhaft herausgestellt, in der Ausführung eines mitbewegten, zweiten Ultraschall-Schwingers die beiden Ultraschall-Schwinger an demselben Halter anzuordnen, der mittels einer gemeinsamen Bewegungsvorrichtung um die Achse des Rohrstücks eine Bewegung auf einem Kreisbogen durchführt. Relativbewegungen der beiden Ultraschall-Schwinger gegeneinander sind dadurch ausgeschlossen. Für die Bewegungsvorrichtung haben sich Parallelogrammführungen als sehr geeignet erwiesen, zumal sie relativ rasch an unterschiedliche Rohrabmessungen anpaßbar sind.

Weitere Vorteile und Merkmale der Erfindung ergeben sich aus den übrigen Ansprüchen sowie der nun folgenden Beschreibung von nicht einschränkend zu verstehenden Ausführungsbeispielen der Erfindung, die unter Bezugnahme auf die Zeichnung näher erläutert werden. In dieser zeigen:
- Fig. 1: eine perspektivische Darstellung einer Vorrichtung für die Ultraschallmessung des Wanddickenverlaufs einer Schweißnaht eines Rohrs,
- Fig. 2: eine Draufsicht auf ein Rohr entsprechend Fig. 1 zur Erläuterung des Verlaufs der Prüfspuren, die eingezeichnet sind,
- Fig. 3: eine Darstellung entsprechend Fig. 2 für eine andere Ausbildung der Vorrichtung,
- Fig. 4: eine Darstellung entsprechend Fig. 2, jedoch für eine Vorrichtung mit drei V-förmig angeordneten Ultraschall-Schwingern,
- Fig. 5: ein Diagramm des zeitlichen Verlaufs t des Eintreffens des Echos der Rohraußenwand sowie der Rohrinnenwand, aufgetragen über den Prüfweg s für zwei Ultraschall-Schwinger,
- Fig. 6: der aus den Daten gem. Fig. 5 ermittelte Wanddickenverlauf d (in durchgezogener Darstellung) sowie die Wasservorlaufstrecke, aufgetragen wiederum über den Prüfweg s und
- Fig. 7: eine perspektivische Darstellung ähnlich Fig. 1 eines zu prüfenden Rohres mit einem zugeordneten, aus vielen Ultraschall-Schwingern aufgebauten Prüfkopf in Form eines Array.

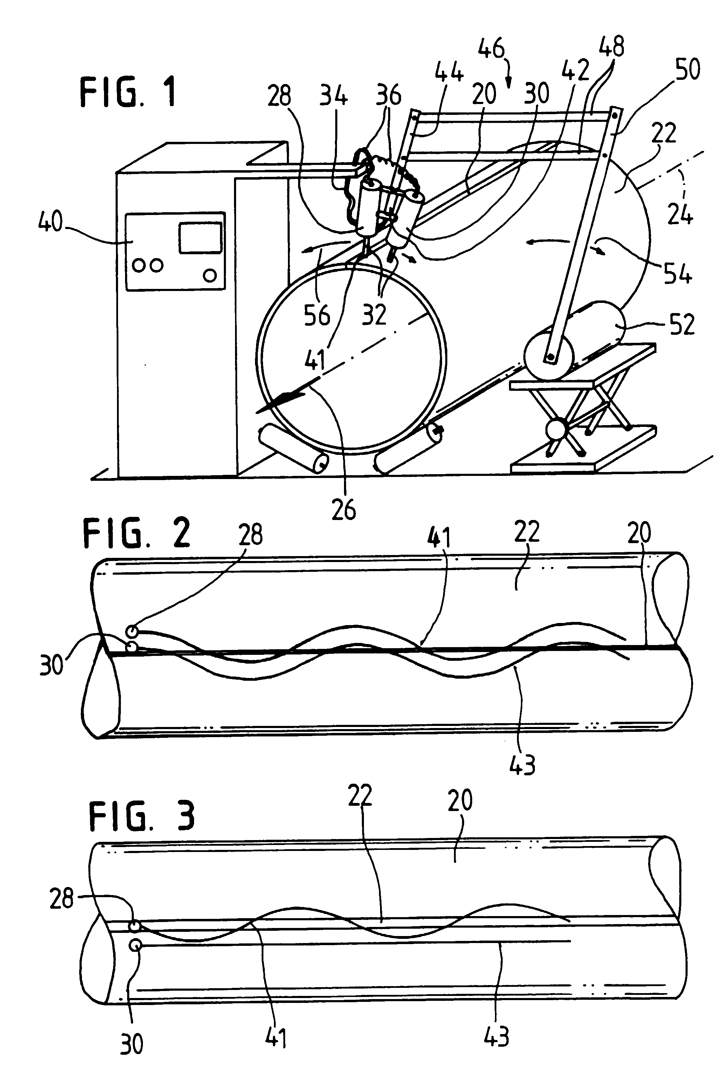

In Fig. 1 ist schematisch eine Vorrichtung für die Ultraschallmessung des Wanddickenverlaufs einer Schweißnaht 20 eines Rohrs 22 gezeigt. In bekannter Weise wird das Rohr 22 aus einem Coil oder einem anderen, geeigneten Blechzuschnitt im Endlosverfahren hergestellt. Der Zuschnitt wird dabei zu einem offenen Rohr gekrümmt, die einander gegenüberstehenden Schmalflächen werden entlang der Schweißnaht 20 miteinander verbunden, wodurch das Rohr 22 gebildet wird.

Kurz hinter der Schweißvorrichtung (nicht dargestellt, da bekannt) befindet sich eine ebenfalls nicht dargestellte, da ansich bekannte Vorrichtung zur Nachbearbeitung. Sie weist üblicherweise einen äußeren und einen inneren Meißel auf. Der äußere Meißel bewirkt eine Aupenschabung, der innere Meißel die Innenschabung. Die Schabung soll jeweils so erfolgen, daß im Bereich der Schweißnaht 20, im Querschnitt gesehen, möglichst keine Abweichung von der idealen Rohrgeometrie auftritt.

Nach dem erfindungsgemäßen Verfahren kann der Wanddickenverlauf im Bereich der Schweißnaht 20 für eine Produktionskontrolle erfaßt werden, um Ausschuß aufgrund mangelhafter Schweißung, insbesondere aber aufgrund mangelhafter Schabung möglichst zu vermeiden.

Das geschweißte Rohr 22 befindet sich auf einer hier nicht näher dargestellten, da ansich bekannten Mechanik für Führung und axialen Transport, der Transport erfolgt in Richtung des mit der Rohrlängsachse 24 zusammenfallenden Richtungspfeils 26. Die Schweißnaht 20 befindet sich an der höchsten Stelle des Rohres 22, sie wird allgemein auch als 12 Uhr Position beschrieben. Die Schweißnaht kann aus dieser Position herstellungsbedingt ausweichen.

Oberhalb des Rohres 22 befinden sich zwei Ultraschall-Schwinger 28, 30, die beide als separate Prüfköpfe ausgeführt und beide so ausgerichtet sind, daß sie auf einer Radiallinie in die Wandung des Rohres 22 einschallen. Anders ausgedrückt verläuft im Betrieb der Ultraschall-Schwinger 28, 30 jeweils der Zentralstrahl des ausgesandten Ultraschallimpulses auf einer Linie, die rechtwinklig zur Rohrlängsachse 24 verläuft und die diese schneidet.

Die beiden Ultraschall-Schwinger 28, 30 berühren das Rohr 22 mechanisch nicht, vielmehr befinden sie sich in einem freien Abstand oberhalb des Rohres, der beispielsweise fünf bis fünfzig Millimeter beträgt. Die Ultraschall-Schwinger 28, 30 sind jeweils über eine Wasservorlaufstrecke 32 in Form eines Wasserstrahls akustisch an das Rohr 22 angekoppelt. Ultraschall-Schwinger mit Wasserstrahlankopplung sind ansich bekannt, sie werden im Fachjargon auch "bubbler" genannt. Über eine gemeinsame, flexible Wasserzuleitung 34 wird beiden Ultraschall-Schwingern 28, 30 Wasser zugeleitet, das Wasser fließt durch die starre, mechanische Verbindung 42 beider Ultraschall-Schwinger 28, 30 und strömt anschließend nach unten, in Hauptstrahlrichtung des Ultraschall-Schwingers aus. Weiterhin ist jeder Ultraschall-Schwinger elektrisch über eine flexible Zuleitung 36 an eine Kontrolleinheit 38 angeschlossen, in der sich für jeden Ultraschall-Schwinger 28, 30 jeweils ein Sender und eine Schaltung 40 für die Meßwertaufbereitung befinden. Die Wasserleitung 34 und die Zuleitung 36 sind durch einen Galgen abgestützt und getragen.

Beide Ultraschall-Schwinger 28, 30 können durch ansich bekannte Mittel gegenüber ihrem starren mechanischen Verbindungsstück 42 in der Radialebene des Rohres 22 und quer zu ihr justiert werden, um die beschriebene Ausrichtung ihrer Zentralstrahlen zu erreichen. Am Verbindungsstück 42 setzt mittig starr ein Arm 44 einer Parallelogrammanordnung 46 an. Diese hat weiterhin zwei parallel zueinander verlaufende, mit dem Arm 44 endseitig gelenkig verbundene, gleichlange Mitnehmerarme 48 und einen parallel zum Arm 44 verlaufenden, ebenfalls mit den Mitnehmerarmen 48 gelenkverbundenen Antriebsarm 50. Dieser ist länger als der Arm 44 und endet in einer Horizontalebene, die durch die Rohrlängsachse 24 verläuft sowie in einem Abstand der Länge der Mitnehmerarme 48 von der Rohrlängsachse 24. Dort befindet sich die Welle eines antreibenden Motors 52, der als Schrittmotor ausgeführt ist. Die Länge des Arms 44 ist so gewählt, daß die Ultraschall-Schwinger 28, 30 im angegebenen, freien Abstand vom Rohr 22 auf einem konzentrischen Kreisbogenstück hin- und herbewegt werden. Dies geschieht durch Hin- und Herbewegung des Antriebsarmes 50 im Sinne des Pfeiles 54, die Hin- und Herbewegung der Ultraschall-Schwinger 28, 30 selbst ist durch den Doppelpfeil 56 dargestellt. Die Bewegung wird so ausgeführt, daß beide Ultraschall-Schwinger 28, 30 die Schweißnaht 20 überqueren und beidseits dieser Schweißnaht 20 ungestörte, durch die Schweißung nicht beeinflußte Bereiche der Rohrwand erfassen. Die Ultraschall-Schwinger 28, 30 werden im Impuls-Echobetrieb eingesetzt, sie senden also kurze Schallimpulse aus, deren Reflexionen (Echos) sie wieder erfassen und umgesetzt in ein elektrisches Signal der Schaltung 40 für die Meßwertaufbereitung zuleiten.

Die Hauptstrahlen der beiden Ultraschall-Schwinger 28, 30 befinden sich in derselben Radialebene, sind jedoch entlang des Umfangs des Rohres 22 versetzt. Der Abstand der Schalleintrittsbereiche 41, 43 der beiden Ultraschall-Schwinger 28, 30 voneinander ist möglichst klein, jedoch größer als die Breite der Schweißnaht 20.

Der praktische Ablauf der Durchführung des Ultraschallmeßverfahrens für den Wanddickenverlauf einer Schweißnaht eines Rohres wird im folgenden beschrieben, diese Beschreibung dient auch zur Erläuterung des Ultraschall-Meßverfahrens: Das Rohr 22 wird in Richtung des Pfeils 26 und damit in Richtung seiner Rohrlängsachse 24 nach vorn (aus der Bildebene heraus) transportiert. Dieser Transport erfolgt nicht immer erschütterungsfrei, vielmehr treten periodisch und unperiodisch Störungen auf, das Rohr 22 ändert möglicherweise seine Lage, vibriert, erfährt durch ausgeschlagene Antriebsrollen Stöße usw.

Durch Hin- und Herschwenken des vom Motor 52 angetriebenen Antriebsarms 50 werden die beiden Ultraschall-Schwinger 28, 30 auf einem Kreisbogen bewegt, dessen Mittelpunkt in der Rohrlängsachse 24 liegt. Sie überfahren bei einer Hinbewegung nacheinander die Schweißnaht 20, ebenso bei einer Rückbewegung. Dabei beschreiben die Schalleintrittsbereiche 41, 43 einen Verlauf, wie er in Fig. 2 dargestellt ist. Dieser Verlauf ist anders ausgedrückt der Ort der Auftreffpunkte der Zentralstrahlen auf dem Rohrmantel. Die mit ausgezogenen Strichen dargestellten Wege der Ultraschall-Schwinger 28, 30, im folgenden Prüfspuren bezeichnet, bestehen in Wirklichkeit aus einer Vielzahl von einzelnen, nebeneinanderliegenden Prüfpunkten, da mit hoher Taktrate ständig Impulse in das Rohr 22 eingeschallt werden.

Als Folge eines ausgesandten Ultraschallimpulses empfängt der jeweilige Ultraschall-Schwinger 28 bzw. 30 zumindest das sogenannte Eintrittsecho, also die Reflexion des ausgesandten Impulses an der Mantelfläche des Rohrs 22, sowie das sogenannte Rückwandecho, also die Reflexion an der Innenwand des Rohres 22. Die Zeitdauer, wann nach dem Aussenden eines Impulses das Eintrittsecho auftritt, hängt von der Länge der Wasservorlaufstrecke 32 ab. Die Zeitdauer, wann das Rückwandecho auftritt, hängt neben der Länge der Wasservorlaufstrecke 32 auch noch von der Dicke der Wand des Rohres 22 ab. Aus beiden Meßdaten ist somit der geometrische Ort des Schalleintrittspunktes in das Rohr und der geometrische Ort der Innenwand bekannt, so dap aus einer Folge von Ultraschallmessungen (Schüssen) der geometrische Verlauf der Wanddicke angegeben werden kann.

Die beiden Ultraschall-Schwinger 28, 30 arbeiten gleichzeitig und im Gleichtakt. Durch die kombinierten Bewegungen, nämlich Fördern des Rohres 22 in Richtung des Pfeils 26 sowie der quer hierzu verlaufenden Hin- und Herbewegung der Ultraschall-Schwinger 28, 30 beschreiben diese im wesentlichen sinusförmige Prüfspuren auf dem Rohr 22. Aufgrund ihres räumlichen Versatzes gegeneinander überqueren die Ultraschall-Schwinger 28, 30 die Schweißnaht 20 zu unterschiedlichen Zeiten und an unterschiedlichen Orten. Die Anordnung ist so gewählt, daß niemals beide Ultraschall-Schwinger 28, 30 gleichzeitig die Schweißnaht 20 abtasten. Die Ausgangssignale beider Ultraschall-Schwinger 28, 30 werden in der Schaltung 40 für Meßwertaufbereitung so verarbeitet, daß gleichzeitig auftretende Meßwertänderungen unberücksichtigt bleiben. Sie sind durch Erschütterungen bei der Manipulation des Rohres oder aber auch Erschütterungen der beiden Ultraschall-Schwinger 28, 30 gemeinsam bedingt.

Dagegen sind Meßwertabweichungen, die nur ein Ultraschall-Schwinger feststellt, der andere aber nicht, im Ausgangssignal wiederzufinden, sie beschreiben geometrische Änderungen, die erfaßt werden sollen. Hat ein Ultraschall-Schwinger eine derartige Änderung erfaßt, so muß der andere Ultraschall-Schwinger eine entsprechende Änderung entweder bereits mit einer gewissen Verzögerungszeit zuvor oder mit derselben Verzögerungszeit danach erfassen. Die Verzögerungszeit ist die Zeit, die vergeht, wenn die Prüfspur eines Ultraschall-Schwingers 28 eine parallel zur Rohrlängsachse 24 verlaufende Mantellinie, beispielsweise eine Kante der Schweißnaht, schneidet, bis der nachfolgende Ultraschall-Schwinger dieselbe Linie schneidet. In der Schaltung 40 für Meßwertaufbereitung können die mit dieser Zeitverzögerung nacheinander eintreffenden Informationen über den geometrischen Verlauf der Schweißnaht zusammengefaßt werden, beispielsweise durch eine elektrische Verzögerung des Signals des vorlaufenden Ultraschall-Schwingers oder durch Maßnahmen im Softwarebereich. Auf diese Weise wird die Information über die Schweißnaht zuverlässiger.

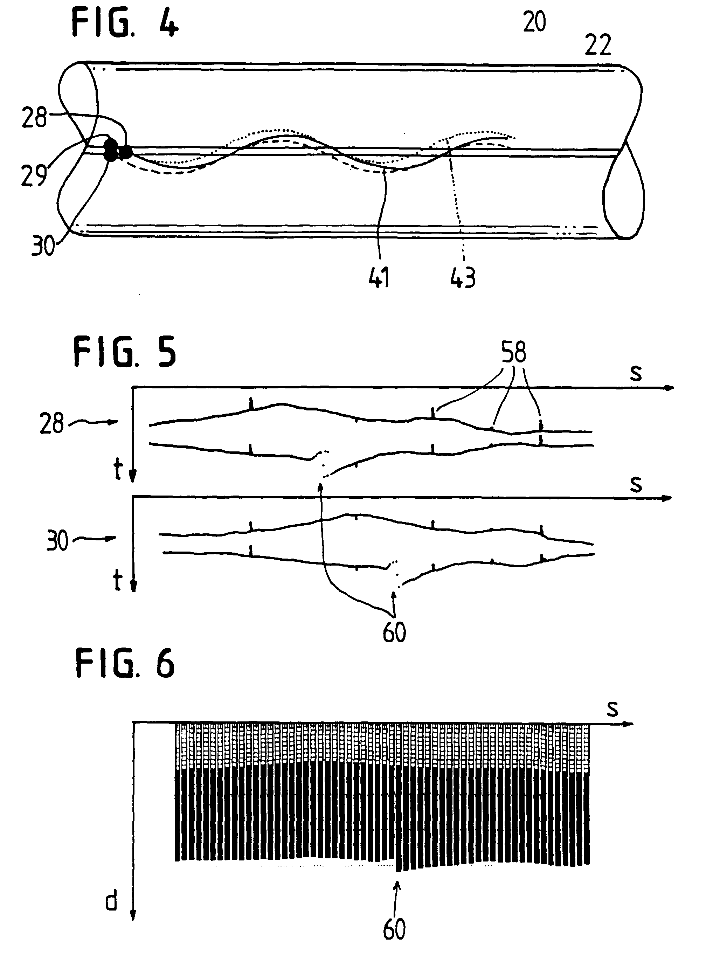

Meßergebnisse, wie sie die Schaltung 40 für Meßwertaufbereitung liefert, sind in den Figuren 5 und 6 für den Fall eines fehlerhaft innengeschabten Rohres dargestellt. Fig. 5 zeigt den Verlauf der Schallaufzeiten t für das Eintrittsecho (jeweils oben) und für das Innenwandecho (jeweils unten) für den ersten Ultraschall-Schwinger 28 und darunter für den nachlaufenden, zweiten Ultraschall-Schwinger 30, jeweils aufgetragen über den Weg s. In den Ausgangssignalen sind auch jeweils Störungen 58 enthalten, die - da sie zeitgleich für beide Ultraschall-Schwinger auftreten - nicht im Ausgangssignal, das in Fig. 6 dargestellt ist, erscheinen. Figur 6 ist eine Darstellung des geometrischen Verlaufs des erfaßten Rohrquerschnitts in gestreckter (nicht runder) Darstellung. Die gemessene Länge der Wasservorlaufstrecke ist jeweils durch querschraffierte Balken dargestellt, die im Anschluß daran ermittelte, örtliche Dicke der Rohrwand ist durch ausgezogene Balken dargestellt. Diese ausgezogenen Balken sind das Bild des Querschnittes der untersuchten Rohrwand. Man erkennt deutlich eine scharfe Kante 60 an der Innenwandung, hier liegt ein Schabefehler vor. Eine nachgeschaltete Schwellenwertschaltung legt fest, ob die Kante 60 ein Sprung ist, der außerhalb oder innerhalb vorgegebener Toleranzen liegt. In Abhängigkeit hiervon erfolgt die Selektion des untersuchten Rohres.

Im Ausführungsbeispiel nach Fig. 3 werden nicht beide Ultraschall-Schwinger 28, 30 bewegt, vielmehr wird mittels einer Vorrichtung gem. Fig. 1 nur der Ultraschall-Schwinger 28 hin- und hergefahren, der Ultraschall-Schwinger 30 strahlt außerhalb der Schweißnaht 20 radial in das Rohr 22 ein und ist starr, im freien Abstand vom Rohrmantel gehalten. Seine Prüfspur ist daher eine parallel zur Rohrlängsachse 24 auf dem Rohrmantel verlaufende Gerade, wie sie in Fig. 3 dargestellt ist. Der zweite Ultraschall-Schwinger 30 dient in dieser Ausführung lediglich zur Entstörung der Werte des ersten Ultraschall-Schwingers.

Vorteilhaft ist die aus Fig. 4 ersichtliche Anordnung mit insgesamt drei Ultraschall-Schwingern 28, 29, 30, die als separate Prüfköpfe ausgebildet und an einem gemeinsamen Verbindungsstück 42, ebenso wie die Ultraschall-Schwinger gem. Fig. 1, gehalten sind. Wie Fig. 4 zeigt, sind die drei Ultraschall-Schwinger im Gegensatz zum Ausführungsbeispiel nach FIg. 1 auch axial versetzt, sie sind V-förmig angeordnet. Der erste, an der Spitze des V's befindliche Ultraschall-Schwinger 28 liegt in Bewegungsrichtung vorn. Der links oberhalb von ihm angeordnete, in Bewegungsrichtung hinter ihm liegende Ultraschall-Schwinger 30 beschreibt eine gepunktet gezeichnete Prüfspur, die im Bereich der Überquerung der Schweißnaht 20 im Hinweg mit der Prüfspur des ersten Ultraschall-Schwingers 28 exakt zusammenfällt. Ein axialer Versatz, wie er aus Fig. 2 ersichtlich ist, tritt damit nicht auf. Anders ausgedrückt überfahren beide Ultraschall-Schwinger 28, 28 exakt denselben (schräg verlaufenden) Querschnitt durch die Rohrwandung. Dies gilt für die Hinbewegung, also in der Zeichnung gem. Fig. 4 die Bewegung nach unten. Auf der Herbewegung, also die Bewegung nach oben, wird der Ultraschall-Schwinger 29 nicht benutzt, sondern der links unter und hinter dem Ultraschall-Schwinger 28 angeordnete zweite Ultraschall-Schwinger 30. Er ist im geometrisch gleichen Abstand wie der Ultraschall-Schwinger 29 angeordnet, mit der Folge, daß die Verzögerungszeiten jeweils identisch sind. Dieser zweite Ultraschall-Schwinger 30 beschreibt nun eine gestrichelt gezeichnete Prüfspur, die teilweise mit der des ersten Ultraschall-Schwingers 28 zusammenfällt, jedoch mit dem bereits besprochenen Zeitversatz.

Diese Anordnung hat neben der bereits beschriebenen Erfassung desselben Querschnittsverlaufs den Vorteil, daß die Meßwerte der einzelnen Ultraschall-Schwinger in einer vereinfachten Form zu einem gemeinsamen Meßwert zusammengefaßt werden können, als dies im Ausführungsbeispiel nach den Figuren 1 und 2 der Fall ist. Im Ausführungsbeispiel nach den Figuren 1 und 2 ist es für eine gemeinsame Erfassung der Herbewegungen notwendig, die geänderten zeitlichen Zusammenhänge und Reihenfolge gegenüber der Hinbewegung zu berücksichtigen. Dies ist im Ausführungsbeispiel nach Fig. 4 nicht notwendig.

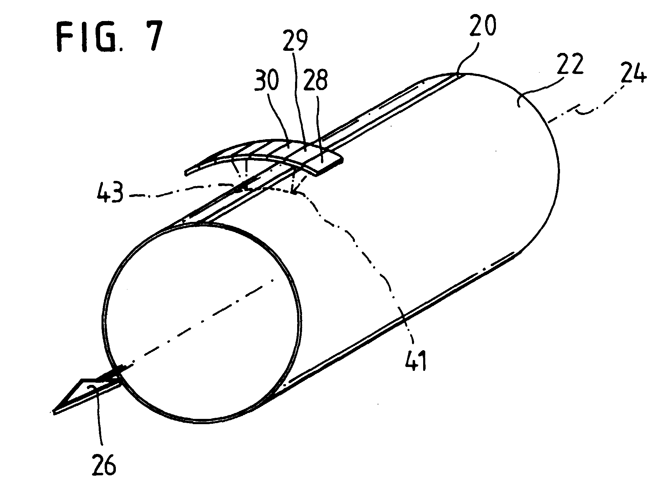

Bei der Anordnung gem. Fig. 7 bilden viele Ultraschall-Schwinger 28 bis 30 (von denen nur 8 gezeigt sind) einen Prüfkopf in Form eines Array, das hier als Phased Array ausgeführt ist. Die einzelnen US-Schwinger des Arrays sind auf einem Kreisbogen angeordnet, dessen Mittelpunkt mit der Rohrlängsachse 24 zusammenfällt. Ihre Zentralstrahlen schneiden sich in einem Punkt auf der Rohrlängsachse 24. Über eine Wasservorlaufstrecke (nicht dargestellt) ist das Array an die Außenwand des Rohres 22 akustisch angekoppelt. Das Array erstreckt sich über einen Winkelbereich, der größer ist als der von der Schweißnaht eingenommene Winkelbereich. Dadurch ist sichergestellt, daß das Array auch beidseitig außerhalb der Schweißnaht in den (ungestörten) Bereich des Rohres 22 einschallen kann.

Beim praktischen Betrieb wird ein Ablauf erreicht, wie er unter Bezugnahme auf das erste Ausführungsbeispiel bereits beschrieben wurde. Eine Bewegung der US-Schwinger entfällt jedoch, das Array bleibt ortsfest. Das Rohr 22 wird in seiner Axialrichtung (Pfeil 26) bewegt. Elektronisch wird der Schalleintrittsbereich 41 so gesteuert, daß er die Schweißnaht hin- und hergehend überfährt, der Ort aller Schalleintrittsbereiche 41, 43 ist die gestrichelt dargestellte Abtastlinie auf dem Außenmantel. Je nach verwendbarer Taktrate wird die Abtastung so durchgeführt, daß entweder (entsprechend dem ersten Ausführungsbeispiel) progressiv hin- und hergehend abgetastet wird, oder es wird nach jedem n-ten Abtasten auf jeden Fall wieder ein Schalleintrittsbereich 43 angesteuert, der mit Sicherheit außerhalb der Schweißnaht 22 liegt, so daß eine Referenz gegeben ist.

Nicht unerwähnt soll bleiben, daß nach dem angegebenen Verfahren nicht nur Schweißnähte 22, die parallel zur Rohrlängsachse 24 verlaufen, sondern auch auf einer Schraubenlinie liegenden Schweißnähte geprüft werden können.

## Patentansprüche

1. Ultraschall-Meßverfahren für den Wanddickenverlauf eines in Richtung seiner Rohrachse (24) bewegten, geschweißten Rohrs (22), insbesondere eines Rohrs mit geschabter Schweißnaht (20), bei dem ein Ultraschall-Schwinger (28) über eine Wasservorlaufstrecke (32) akustisch an das Rohr (22) angekoppelt wird, von ihm Ultraschallimpulse in einem Schalleintrittsbereich (41) in das Rohr (22) eingeschallt werden, die reflektierten Anteile dieser Impulse von dem Ultraschall-Schwinger (28) wieder aufgenommen und als elektrisches Signal einer Schaltung (40) für Meßwertaufbereitung zugeleitet werden, der Schalleintrittsbereich durch Bewegen des Ultraschall-Schwingers (28) relativ zum Rohr (22) auf dem Außenmantel des Rohrs (22) so hin- und herbewegt wird, daß die Schweißnaht (20) und die Randbereiche links und rechts der Schweißnaht (20) überfahren werden, dadurch gekennzeichnet, daß in Nähe des ersten Ultraschall-Schwingers (28) ein zweiter Ultraschall-Schwinger (30, 29) angeordnet ist, der ebenfalls über eine Wasservorlaufstrecke (32) akustisch an das Rohr (22) angekoppelt ist, von dem Ultraschallimpulse in das Rohr (22) eingeschallt werden und die reflektierten Anteile dieser Impulse ebenfalls als elektrisches Signal der Schaltung (40) für Meßwertaufbereitung zugeleitet werden, daß dieser zweite Ultraschall-Schwinger (30, 29) zumindest die axiale Bewegung relativ zum Rohr (22) gemeinsam mit dem ersten Ultraschall-Schwinger (28) durchführt, daß niemals beide Ultraschall-Schwinger (28, 30, 29) sich gleichzeitig über der Schweißnaht befinden, und daß die Signale beider Ultraschall-Schwinger (28; 30, 29) in der Schaltung (40) für Meßwertaufbereitung so verarbeitet werden, daß in den elektrischen Signalen vorhandene Störungen, die sowohl im elektrischen Signal des ersten Ultraschall-Schwingers (28) als auch im elektrischen Signal des zweiten Ultraschall-Schwingers (30) auftreten, nicht im Ausgangssignal erscheinen, sofern sie einen zeitlichen Abstand voneinander haben, der Null ist oder zumindest so kurz ist, daß in ihm praktisch keine Lageänderung des Rohrs (22) quer zur Rohrachse (24) stattfinden konnte.

2. Ultraschall-Meßverfahren nach Anspruch 1, dadurch gekennzeichnet, daß die Ultraschall-Schwinger (28 bis 30) möglichst nahe neben einander angeordnet werden, vorzugsweise daß der Abstand ihrer Schalleintrittsbereiche (41, 43) nicht größer gewählt wird als die zweifache Breite der Schweißnaht (20).

3. Ultraschall-Meßverfahren nach Anspruch 1 oder 2, dadurch gekennzeichnet, daß die Ultraschall-Schwinger (28; 30, 29) starr mit einander verbunden sind und gemeinsam bewegt werden.

4. Ultraschall-Meßverfahren nach einem der Ansprüche 1 bis 3, dadurch gekennzeichnet, daß die Ultraschall-Schwinger (28; 30, 29) in einem Abstand von drei bis dreißig Millimetern, vorzugsweise fünf bis zwölf Millimetern, von der Rohraußenwand berührungsfrei hin- und herbewegt werden.

5. Ultraschall-Meßverfahren nach einem der Ansprüche 1 bis 4, dadurch gekennzeichnet, daß die Ultraschall-Schwinger (28; 30, 29) geometrisch so versetzt werden und die Bewegung so durchgeführt wird, daß jeweils mindestens zwei Ultraschall-Schwinger (z. B. 28 und 29) nacheinander dieselbe Prüfspur beim Überqueren der Schweißnaht (20) beschreiben.

6. Ultraschall-Meßverfahren nach einem der Ansprüche 1 bis 5, dadurch gekennzeichnet, daß bei Hin- und Herbewegung beider Ultraschall-Schwinger (28; 30, 29) über die Schweißnaht (20) die nach einander eintreffenden Signale beider Ultraschall-Schwinger (28 bis 30) zu einem gemeinsamen signal über den Wanddickenverlauf zusammengefaßt werden.

7. Ultraschall-Meßverfahren für den Wanddickenverlauf eines in Richtung seiner Rohrachse (24) bewegten, geschweißten Rohrs (22), insbesondere eines Rohrs mit geschabter Schweißnaht (20), bei dem ein Ultraschall-Schwinger (28) über eine Wasservorlaufstrecke (32) akustisch an das Rohr (22) angekoppelt wird, von ihm Ultraschallimpulse in einem Schalleintrittsbereich (41) in das Rohr (22) eingeschallt werden, die reflektierten Anteile dieser Impulse von dem Ultraschall-Schwinger (28) wieder aufgenommen und als elektrisches Signal einer Schaltung (40) für Meßwertaufbereitung zugeleitet werden, und der Schalleintrittsbereich auf dem Außenmantel des Rohrs (22) so hin- und herbewegt wird, daß die Schweißnaht (20) und die Randbereiche links und rechts der Schweißnaht (20) überfahren werden, dadurch gekennzeichnet, daß mehrere Ultraschall-Schwinger (28, 29, 30) zu einem Prüfkopf in Form eines Arrays, vorzugsweise eines Phased Arrays, zusammengefaßt sind, daß die einzelnen Ultraschall-Schwinger (28, 29, 30) elektrisch so angesteuert werden, daß der Schalleintrittsbereich des Arrays eine Bewegung quer zur Rohrachse ausführt, und daß die Signale der einzelnen Ultraschall-Schwinger (28, 29, 30) in der Schaltung (40) für Meßwertaufbereitung so verarbeitet werden, daß in den elektrischen Signalen vorhandene Störungen, die sowohl im elektrischen Signal eines Ultraschall-Schwingers (z. B. 28), als auch im elektrischen Signal eines zweiten Ultraschall-Schwingers (z. B. 30) auftreten, nicht im Ausgangssignal erscheinen, sofern sie einen zeitlichen Abstand voneinander haben, der zumindest so kurz ist, daß in ihm praktisch keine Lageänderung des Rohres (22) quer zur Rohrachse (24) stattfinden konnte.

8. Vorrichtung zur Durchführung des Ultraschall-Meßverfahrens nach einem der Ansprüche 1 bis 6, mit einer Mechanik für Führung und axialen Transport eines geschweißten Rohrs (22) und mit einem Ultraschall-Schwinger (28), der an einer Bewegungsvorrichtung (44 bis 52) angeordnet ist, die ihn quer zur Schweißnaht (20) des Rohres (22) berührungsfrei so hin- und herbewegt, daß die Schweißnaht (20) und die Randbereiche links und rechts der Schweißnaht (20) überfahren werden, der eine Wasservorlaufstrecke (32) zwischen sich und dem Rohr aufweist und der an eine Schaltung (40) zur Meßwertaufbereitung angeschlossen ist, dadurch gekennzeichnet, daß mindestens ein zweiter Ultraschall-Schwinger (30, 29) in möglichst unmittelbarer Nähe des Ultraschall-Schwingers (28) angeordnet ist, der ebenfalls eine Wasservorlaufstrecke (32) zwischen sich und dem Rohr (22) aufweist, der ausgangsseitig an die Schaltung (40) für Meßwertaufbereitung angeschlossen ist und der entweder stationär gehalten und außerhalb der Schweißnaht (20) auf das Rohr (22) ausgerichtet ist oder an einer zweiten (vorzugsweise mit der ersten Bewegungsvorrichtung identischen) Bewegungsvorrichtung angeordnet ist, die ihn quer zur Rohrachse (24) hin- und herbewegt unter Überfahren der Schweißnaht (20), wobei niemals beide Ultraschall-Schwinger (28 bzw. 30) sich gleichzeitig über der Schweißnaht (20) befinden, und daß in der Schaltung (40) für Meßwertaufbereitung in den elektrischen Signalen vorhandene Störungen, die sowohl im elektrischen Signal des ersten Ultraschall-Schwingers (28) als auch im elektrischen Signal des zweiten Ultraschall-Schwingers (30) auftreten, nicht im Ausgangssignal erscheinen, sofern sie einen zeitlichen Abstand voneinander haben, der Null ist oder zumindest so kurz ist, daß in ihm praktisch keine Lageänderung des Rohrs (22) quer zur Rohrachse (24) stattfinden konnte.

9. Vorrichtung zur Durchführung des Ultraschall-Meßverfahrens nach einem der Ansprüche 1-7, mit einer Mechanik für Führung und axialen Transport eines geschweißten Rohrs (22), das eine Schweißnaht (20) aufweist und mit einem Ultraschall-Schwinger (28), dessen Schalleintrittsbereich auf dem Rohr (22) quer zur Schweißnaht (20) des Rohres (22) hin- und herbewegt wird, der eine Wasservorlaufstrecke (32) zwischen sich und dem Rohr (22) aufweist und der an eine Schaltung (40) zur Meßwertaufbereitung angeschlossen ist, dadurch gekennzeichnet, daß eine Vielzahl weiterer Ultraschall-Schwinger (30, 29 ...) unter Bildung eines Array, vorzugsweise eines Phased Array mit dem ersten Ultraschall-Schwinger (28) verbunden ist und ebenfalls eine Wasservorlaufstrecke (32) zwischen sich und dem Rohr (22) aufweisen und ausgangsseitig an die Schaltung (40) zur Meßwertaufbereitung angeschlossen sind, wobei das aus den US-Schwingern gebildetete Array (28, 30, 29 ...) stationär gehalten und so angeordnet und angesteuert ist, daß sein Schalleintrittsbereich quer zur Schweißnaht (20) des Rohres (22) so hin- und herbewegt wird, daß die Schweißnaht (20) und die Randbereiche links und rechts der Schweißnaht (20) überfahren werden, und daß in der Schaltung (40) für Meßwertaubereitung in den elektrischen Signalen der Ultraschall-Schwinger des Arrays (28, 30, 29 ...) vorhandene Störungen, die sowohl im elektrischen Signal eines ersten Bereichs des Arrays (28, 30, 29 ...) als auch im elektrischen Signal eines zweiten Bereich des Arrays (28, 30, 29 ...) auftreten, nicht im Ausgangssignal erscheinen, sofern sie einen zeitlichen Abstand voneinander haben, der zumindest so kurz ist, daß in ihm praktisch keine Lageänderung des Rohrs (22) quer zur Rochrachse stattfinden konnte.

10. Vorrichtung nach Anspruch 9, dadurch gekennzeichnet, daß das aus den vielen US-Schwingern (28, 30, 29 ...) gebildete Array kreisbogenförmig gekrümmt ist und der Krümmungsmittelpunkt auf der Rohrlängsachse (24) liegt, und sich die Zentralstrahlen aller Ultraschall-Schwinger (28, 30, 29 ...) in einem Punkt der Rohrlängsachse (24) schneiden.

## Claims

1. Ultrasonic measuring process for the wall thickness curve of a welded pipe (22) conveyed in the direction of its pipe axis (24), especially a pipe with a shaved weld seam (20) in which an ultrasonic oscillator (28) is coupled to the pipe (22) via a hydraulic buffer (32), is subjected to ultrasonic pulses in an acoustic entry zone (41) into the pipe (22), the reflected components of said pulses are received by the ultrasonic oscillator (28) and sent as electrical signals to a measured value processing circuit (40), the ultrasonic oscillator (28) is moved relative to the pipe (22) so that the acoustic entry zone on the outer skin of the pipe (22) is moved back and forth in such a way that the weld seam (20) and the peripheral regions to the left and right of the weld seam (20) are passed over, characterized by the fact that in the vicinity of the first ultrasonic oscillator (28) a second ultrasonic oscillator (30, 29) is arranged which is also coupled acoustically to the pipe (22) via a hydraulic buffer (32), the pipe (22) is exposed to ultrasonic pulses of this second ultrasonic oscillator (30, 29) and the reflected components of said pulses are also sent as electrical signals to the measured value processing circuit (40), that said second ultrasonic oscillator (30, 29) executes at least the axial movement relative to the pipe (22) together with the first ultrasonic oscillator (28), that both ultrasonic oscillators (28; 30, 29) are never above the weld seam at the same time and that the signals of both ultrasonic oscillators (28; 30, 29) are processed in the measured value processing circuit (40) in such a way that disturbances present in the electrical signals which occur both in the electrical signal of the first ultrasonic oscillator (28) and also in the signal of the second ultrasonic oscillator (30) do not appear in the output signal if they are separated by a time interval that is equal to zero or is at least so brief that practically no change in position of the pipe (22) transversely to the pipe axis (24) could take place in it.

2. Ultrasonic measuring process in accordance with Claim 1, characterized by the fact that the ultrasonic oscillators (28-30) are arranged as close together as possible, the distance between their acoustic entry zones (41, 43) preferably not being selected greater than twice the width of the weld seam (20).

3. Ultrasonic measuring process in accordance with Claim 1 or 2, characterized by the fact that the ultrasonic oscillators (28; 30, 29) are rigidly connected to one another and are moved together.

4. Ultrasonic measuring process in accordance with one of Claims 1 through 3, characterized by the fact that the ultrasonic oscillators (28; 30, 29) are moved at a distance of 3 to 30 millimeters, preferably 5 to 12 millimeters, from the outer edge of the pipe back and forth without contacting it.

5. Ultrasonic measuring process in accordance with one of Claims 1 through 4, characterized by the fact that the ultrasonic oscillators (28; 30, 29) are offset geometrically and their movements are executed in such a way that in each case at least two ultrasonic oscillators (e.g., 28 and 29) successively describe the same test track upon crossing the weld seam (20).

6. Ultrasonic measuring process in accordance with one of Claims 1 through 5, characterized by the fact that when the two ultrasonic oscillators (28; 30, 29) are moved back and forth over the weld seam (20), the successive incoming signals of both ultrasonic oscillators (28-30) are combined into a common signal over the curve of the wall thickness.

7. Ultrasonic measuring process for the wall thickness curve of a welded pipe (22) conveyed in the direction of its pipe axis (24), especially a pipe with a shaved weld seam (20) in which an ultrasonic oscillator (28) is coupled to the pipe (22) via a hydraulic buffer (32), is subjected to ultrasonic pulses in an acoustic entry zone (41) into the pipe (22), the reflected components of said pulses are received by the ultrasonic oscillator (28) and sent as electrical signals to a measured value processing circuit (40), the ultrasonic oscillator (28) is moved relative to the pipe (22) so that the acoustic entry zone on the outer skin of the pipe (22) is moved back and forth in such a way that the weld seam (20) and the peripheral regions to the left and right of the weld seam (20) are passed over, characterized by the fact that several ultrasonic oscillators (28, 29, 30) are combined to form a test head in the form of an array, preferably a phased array, that the individual ultrasonic oscillators (28, 29, 30) are electrally excited in such a way, that the acoustic entry zone of the array executes a movement transversely to the pipe axis, and that the signals of the individual ultrasonic oscillators (28; 30, 29) are processed in the measured value processing circuit (40) in such a way that disturbances present in the electrical signals which occur both in the electrical signal of one ultrasonic oscillator (e.g. 28) and also in the signal of a second ultrasonic oscillator (e.g. 30) do not appear in the output signal if they are separated by a time interval that is equal to zero or is at least so brief that practically no change in position of the pipe (22) transversely to the pipe axis (24) could take place in it.

8. Apparatus for implementation of the ultrasonic measuring process in accordance with one of Claims 1 through 6 with a mechanism for guidance and axial conveying of welded pipe (22) and with an ultrasonic oscillator (28) which is arranged on a moving device (44-52) which without contacting the pipe moves it back and forth transversely to the weld seam (20) of the pipe (22) in such a way that the weld seam (20) and the peripheral regions to the left and right of the weld seam (20) are passed over, which has a hydraulic buffer (32) between itself and the pipe and which is connected to a measured value processing circuit (40), characterized by the fact that at least a second ultrasonic oscillator (30, 29) is arranged in the closest possible proximity to the first ultrasonic oscillator (28) which also has a hydraulic buffer (32) between itself and the pipe (22) and is connected on the output side to the measured value processing circuit (40) and which is either held stationary and aligned on the pipe (22) outside the weld seam (20) or is arranged on a second (preferably identical to the first) moving device which moves it back and forth across the longitudinal axis of the pipe (24) while crossing the weld seam (20) and that any disturbances present in the electrical signals in the measured value processing circuit (40) which occur both in the electrical signal of the first ultrasonic oscillator (28) and in the electrical signal of the second ultrasonic oscillator (30) do not appear in the output signal as long as they are separated by a time interval which is equal to zero or is at least so brief that practically no change in position of the pipe (22) transversely to the pipe axis (24) could take place in it.

9. Apparatus for implementation of the ultrasonic measuring process in accordance with one of Claims 1 through 7 with a mechanism for guidance and axial conveying of a welded pipe (22) which has a weld seam (20) and with an ultrasonic oscillator (28) whose acoustic entry zone on the pipe (22) is moved back and forth across the weld seam (20) of the pipe (22), which has a hydraulic buffer (32) between itself and the pipe (22) and which is connected to a measured value processing circuit (40), characterized by the fact that that a large number of additional ultrasonic oscillators (30, 29,....) are connected to form an array, preferably a phased array, with the first ultrasonic oscillator (28) and also have a hydraulic buffer (32) between themselves and the pipe (22) and are connected on the output side to the measured value processing circuit (40), the array (28, 30, 29...) formed from the ultrasonic oscillators being held stationary and covering an angular range larger than the angular range of the weld seam (20) in such a way that the weld seam (20) and the peripheral regions to the left and right of the weld seam (20) are passed over, and that in the measured value processing circuit (40), disturbances present in the electrical signals which appear both in the electrical signal of a area of the array (28, 30, 29) and in the electrical signal of a second area of the array (28, 30, 29) do not appear in the output signal as long as they are separated by a time interval which is equal to zero or is at least so brief that practically no change in position of the pipe (22) transversely to the pipe axis (24) could take place in it.

10. Apparatus in accordance with Claim 9, characterized by the fact that the array formed from the large number of ultrasonic oscillators (28, 30, 29...) is curved as an arc of circle and that the midpoint of curvature lies on the longitudinal axis (24) of the pipe and the center beams of all the ultrasonic oscillators (28, 30, 29...) intersect at a point on the longitudinal axis (24) of the pipe.

## Revendications

1. Méthode de mesure ultrasonique de la variation de l'épaisseur de paroi d'un tube (22) soudé et déplacé dans le sens de son axe de tube (24), en particulier d'un tube présentant une soudure grattée (20), dans le cas de laquelle un transducteur (28) est couplé de manière acoustique par une pré-course d'eau (32) au tube (22), ledit transducteur emet des impulsions ultrasonores entrant - dans une zone d'entrée acoustique (41) - dans le tube (22), les composantes refléchies de ces impulsions sont à nouveau reçues par le transducteur (28) et amenées en tant que signal électrique à un circuit (40) de préparation des valeurs mesurées, la zone d'entrée acoustique est - par le déplacement du transducteur (28) relatif au tube (22) - actionné d'un mouvement alternatif sur l'enveloppe extérieure du tube (22) de telle manière qu'elle passe sur la soudure (20) ainsi que sur les régions marginales à gauche et à droite de la soudure (20), caractérisée par le fait qu'un deuxième transducteur (30, 29) est disposé à proximité du premier transducteur (28), ce deuxième transducteur est lui aussi couplé de manière acoustique par une pré-course d'eau (32) au tube (22), emet des impulsions ultrasonores entrant dans le tube (22), et les composantes refléchies de ces impulsions sont elles aussi amenées en tant que signal électrique au circuit (40) de préparation des valeurs mesurées, que ce deuxième transducteur (30, 29) exerce du moins le mouvement axial relatif au tube (22) en commun avec le premier transducteur (28), que les deux transducteurs (28, 30, 29) ne se trouvent jamais en même temps au-dessus de la soudure, et que les signaux des deux transducteurs (28; 30, 29) sont traités dans le circuit (40) de préparation des valeurs mesurées de telle manière que des perturbations existantes dans les signaux électriques, qui se présentent aussi bien dans le signal électrique du premier transducteur (28) que dans le signal électrique du deuxième transducteur (30), n'apparaissent pas dans le signal de sortie si elles sont séparées l'une de l'autre par un intervalle qui est égal à zéro ou qui est au moins tellement bref qu'aucun changement de position du tube (22) transversalement à l'axe de tube (24) ne pouvait pratiquement avoir lieu dans celui-ci.

2. Méthode de mesure ultrasonique selon la revendication 1, cararctérisée par le fait que les transducteurs (28 à 30) sont disposés l'un à côté de l'autre aussi proche que possible, que - de préférence - la distance entre leurs zones d'entrée acoustiques (41, 43) est choisie de manière à ne pas être plus grande que la double largeur de la soudure (20).

3. Méthode de mesure ultrasonique selon la revendication 1 ou 2, caractérisée par le fait que les transducteurs (28; 30, 29) sont reliés de manière rigide entre eux et sont déplacés en commun.

4. Méthode de mesure ultrasonique selon l'une des revendications 1 à 3, caractérisée par le fait que les transducteurs (28; 30, 29) sont actionnés d'un mouvement alternatif, à savoir à une distance de 3 à 30 millimètres, de préférence de 5 à 12 millimètres, de la paroi extérieure du tube sans entrer en contact avec celle-ci.

5. Méthode de mesure ultrasonique selon l'une des revendications 1 à 4, caractérisée par le fait que les transducteurs (28; 30, 29) sont décalés géométriquement de telle manière et le mouvement est exercé de telle sorte que, respectivement, deux transducteurs (par exemple 28 et 29) du moins décrivent successivement la même trace d'essai en traversant la soudure (20).

6. Méthode de mesure ultrasonique selon l'une des revendications 1 à 5, caractérisée par le fait que lors du mouvement de va-et-vient des deux transducteurs (28; 30, 29) au-dessus de la soudure (20), les signaux entrant successivement des deux transducteurs (28 à 30) sont combinés en un signal commun sur la variation de l'épaisseur de paroi.

7. Méthode de mesure ultrasonique de la variation de l'épaisseur de paroi d'un tube (22) soudé et déplacé dans le sens de son axe de tube (24), en particulier d'un tube présentant une soudure grattée (20), dans le cas de laquelle un transducteur (28) est couplé de manière acoustique par une pré-course d'eau (32) au tube (22), ledit transducteur emet des impulsions ultrasonores entrant - dans une zone d'entrée acoustique (41) - dans le tube (22), les composantes refléchies de ces impulsions sont à nouveau reçues par le transducteur (28) et amenées en tant que signal électrique à un circuit (40) de préparation des valeurs mesurées, et la zone d'entrée acoustique est actionné d'un mouvement alternatif sur l'enveloppe extérieure du tube (22) de telle manière qu'elle passe sur la soudure (20) ainsi que sur les régions marginales à gauche et à droite de la soudure (20), caractérisée par le fait que plusieurs transducteurs (28, 29, 30) sont combinés pour former un palpeur sous forme d'un array, de préférence d'un array structuré, que les transducteurs (28, 29, 30) individuels sont excités électriquement de telle manière que la zone d'entrée acoustique de l'array exerce un mouvement transversalement à l'axe de tube, et que les signaux des transducteurs (28, 29, 30) individuels sont traités dans le circuit (40) de préparation des valeurs mesurées de telle manière que des perturbations existantes dans les signaux électriques, qui se présentent aussi bien dans le signal électrique d'un transducteur (par exemple 28) que dans le signal électrique d'un deuxième transducteur (par exemple 30), n'apparaissent pas dans le signal de sortie si elles sont séparées l'une de l'autre par un intervalle qui est au moins tellement bref qu'aucun changement de position du tube (22) transversalement à l'axe de tube (24) ne pouvait pratiquement avoir lieu dans celui-ci.

8. Dispositif pour la mise en oeuvre de la méthode de mesure ultrasonique selon l'une des revendications 1 à 6, comprenant un mécanisme pour le guidage et le transport axial d'un tube soudé (22) ainsi qu'un transducteur (28) qui est disposé sur un dispositif de mouvement (44 à 52) qui l'actionne d'un mouvement alternatif et sans contact transversalement à la soudure (20) du tube (22) de telle manière qu'il passe sur la soudure (20) et les régions marginales à gauche et à droite de la soudure (20), qui présente une pré-course d'eau (32) entre lui-même et le tube et qui est connecté à un circuit (40) de préparation des valeurs mesurées, caractérisé par le fait que du moins un deuxième transducteur (30, 29) est disposé, si possible, à proximité immédiate du transducteur (28), qui présente lui aussi une pré-course d'eau (32) entre lui-même et le tube (22), qui est relié en sortie au circuit (40) de préparation des valeurs mesurées et qui est ou tenu de manière stationnaire et aligné sur le tube (22) à l'extérieur de la soudure (20) ou est disposé sur un deuxième dispositif de mouvement (de préférence identique au premier dispositif de mouvement) qui l'actionne d'un mouvement alternatif transversalement à l'axe de tube (24) en traversant la soudure (20), les deux transducteurs (28 ou bien 30) ne se trouvant jamais en même temps au-dessus de la soudure (20), et que, dans le circuit (40) de préparation des valeurs mesurées, des perturbations existantes dans les signaux électriques, qui se présentent aussi bien dans le signal électrique du premier transducteur (28) que dans le signal électrique du deuxième transducteur (30), n'apparaissent pas dans le signal de sortie si elles sont séparées l'une de l'autre par un intervalle qui est égal à zéro ou qui est au moins tellement bref qu'aucun changement de position du tube (22) transversalement à l'axe de tube (24) ne pouvait pratiquement avoir lieu dans celui-ci.

9. Dispositif pour la mise en oeuvre de la méthode de mesure ultrasonique selon l'une des revendications 1 à 7, comprenant un mécanisme pour le guidage et le transport axial d'un tube soudé (22) qui présente une soudure (20), ainsi qu'un transducteur (28) dont la zone d'entrée acoustique sur le tube (22) est actionné d'un mouvement alternatif transversalement à la soudure (20) du tube (22), qui présente une pré-course d'eau (32) entre lui-même et le tube (22) et qui est connecté à un circuit (40) de préparation des valeurs mesurées, caractérisé par le fait qu'une multitude d'autres transducteurs (30, 29 ...) est reliée, en formant un array et de préférence un array structuré, au premier transducteur (28), qui présentent eux aussi une pré-course d'eau (32) entre eux et le tube (22) et sont reliés en sortie au circuit (40) de préparation des valeurs mesurées, l'array (28, 30, 29 ...) formé par les transducteurs étant tenu de manière stationnaire et étant disposé et excité de telle manière que sa zone d'entrée acoustique est actionné d'un mouvement alternatif transversalement à la soudure (20) du tube (22) de telle manière qu'elle passe sur la soudure (20) ainsi que sur les régions marginales à gauche et à droite de la soudure (20), et que, dans le circuit (40) de préparation des valeurs mesurées, des perturbations existantes dans les signaux électriques des transducteurs de l'array (28, 30, 29 ...), qui se présentent aussi bien dans le signal électrique d'une première zone de l'array (28, 30, 29 ...) que dans le signal électrique d'une deuxième zone de l'array (28, 30, 29 ...), n'apparaissent pas dans le signal de sortie si elles sont séparées l'une de l'autre par un intervalle qui est au moins tellement bref qu'aucun changement de position du tube (22) transversalement à l'axe de tube ne pouvait pratiquement avoir lieu dans celui-ci.

10. Dispositif selon la revendication 9, caractérisé par le fait que l'array formé par la multitude des transducteurs (28, 30, 29 ...) est courbé en forme d'un arc de cercle et que le centre de courbure se trouve sur l'axe longitudinal (24) du tube, et que les rayons centraux de tous les transducteurs (28, 30, 29 ...) se coupent en un point de l'axe longitudinal (24) du tube.
